# EUROPEAN PATENT SPECIFICATION

(11) **EP 2 348 818 B1**
(45) Date of publication and mention of the grant of the patent: **15.11.2017**
(21) Application number: 09788157.7
(22) Date of filing: 04.09.2009
(51) Int. Cl.: A01J 5/007, A01J 5/017, A01K 1/12, A01J 7/02

(54) **DEVICE FOR MILKING ANIMALS**
VORRICHTUNG ZUM MELKEN VON TIEREN
DISPOSITIF POUR LA TRAITE D'ANIMAUX

(30) Priority: 24.09.2008 NL 1035972
(43) Date of publication of application: 03.08.2011
(73) Proprietor: Lely Patent N.V., 3147 PB Maassluis (NL)
(72) Inventor: VILLADS, Kristensen, 3147 PA Maassluis (NL); ANTOON, Peter André Theelen, 3147 PA Maassluis (NL); VAN LIER, Wilhelmus Johannes Adrianus, 3147 PA Maassluis (NL)
(74) Representative: Octrooibureau Van der Lely N.V.
(86) International application number: PCT/NL2009/000173
(87) International publication number: WO 2010/036102

(56) References cited:
- EP-A- 1 905 297
- WO-A-03/024202
- US-A- 4 572 105

## Description

The invention relates to a device for milking animals according to the preamble of claim 1.

Such a device is known from application WO2003024202. This application discloses a milking device comprising a plurality of milking stations which, via two first central milk lines, are connected to a milk tank. Via a collective second central milk line, each milking station is further connected to a separation tank for transporting and centrally collecting milk which is unfit for human consumption. Near the separation tank there is connected a central washing device to lead washing liquid via the second central milk line to the milking stations. For cleaning of a milking station with a cleaning liquid the cleaning liquid is led via the second central milk line to the milking station. At the same time the second central milk line too is cleaned.

A problem of the above-mentioned device is that the milking device cannot be properly cleaned. When a milking station is cleaned, near the end of the second central milk line cleaning liquid is passed into this line and is led via this line to the milking station. Milk residues in the second central milk line and other impurities are carried along and are led with the cleaning liquid through the entire milking station. The contaminating substances, such as bacteria and clots, may remain behind in the interior of the milking station and thus contaminate the milk still to be yielded or even cause blockage of the interior of the milking station. Because the second central milk line is used for discharge of poor quality milk, this line is more contaminated than a normal discharge line for milk.

The invention aims at providing a device for milking animals of the above-mentioned type which is less susceptible to contamination.

This object is achieved by means of the features of claim 1. The second central milk line serves to transport milk which is contaminated and unfit for human consumption. Consequently, said second central milk line is relatively dirty itself due to milk residues attached thereto. According to the invention, the supply connection of the line cleaning device with the second central milk line is located at least equally far from the supply discharge as the connection of a second discharge line with the second central milk line, as a result of which, during the cleaning of the second central milk line, milk residues in the second central milk line are directly led by the cleaning liquid towards the liquid discharge and discharged. These residues are not led to a milking station, where they may cause additional contamination. The displacing means serves inter alia to transport milk which is fit for consumption from the milking station, via a first discharge line, to a first milk tank. The same displacing means also serves to transport milk which is unfit for human consumption from the milking station, via a second discharge line, to the liquid discharge for milk which is unfit for human consumption. The second central milk line thus connects the milk collecting container to said liquid discharge. By "at least equally far from" is meant "as far as or upstream of", viewed in the direction of the normal flow through the central milk line, in which case upstream is viewed in the direction from the liquid discharge.

It should be noted that, in principle, there may also be provided milking stations of which, for example, the milk collecting container is differently connected, but preferably all the milking stations are built up and connected as described in the preamble of claim 1.

In particular, the first discharge line is connected to a first central milk line for leading milk to a first milk tank. By combining the first discharge lines in one single line, by means of this feature less material is required. In an embodiment but not according to the invention, the line cleaning device is a separate cleaning device for cleaning only the second central milk line. This makes it possible to clean the second central milk line in another manner than a milking station or the first central milk line. Because the second central milk line does not serve for transport of milk which is fit for human consumption, this line has to be cleaned less frequently, less intensively and less accurately. This saves energy and cleaning agent. According to the invention, the device comprises at least one station cleaning device for cleaning the parts of a milking station that come into contact with milk, wherein the station cleaning device is the line cleaning device. By combining the functions of cleaning a milking station and the second central milk line in one device, there will be created a compact and cheap embodiment. According to the invention, the line cleaning device is capable of being brought into a first position for cleaning only the second central milk line and into a second position for cleaning the milking station. This makes it possible to clean the second central milk line in another manner than a milking station or the first central milk line, the first discharge lines, respectively. Because the second central milk line does not serve for transport of milk which is fit for human consumption, this line has to be cleaned less frequently and less intensively.

In another favourable embodiment, the second central milk line is connected to a separation device of a milking station for separating milk which is unfit for human consumption. Such a separation device is usually present as a standard in a milking station and comprises a valve system for separating the milk from the line for milk which is suitable for consumption. By placing the coupling downstream of said valve system, no additional valve system is required.

Preferably, the separation device comprises at least one open separation aperture for separating milk which is unfit for human consumption in a separate container and the second central milk line is connectable to the separation aperture. By open separation aperture is meant a closable or not closable aperture which is in contact with the environment. Such a separation aperture is usually present as a standard in a milking station. Coupling of the second milk line is then simple and needs no individual control.

Such a separation aperture is usually present as a standard in a milking station. It is preferably provided as far as possible from the liquid discharge. This makes it possible first to empty the second central milk line towards the liquid discharge by means of compressed air before cleaning with a liquid.

In a preferred embodiment, the line cleaning device comprises a chemicals intake means for direct intake of cleaning chemicals into a line. A mixing vessel comprising the supply and discharge valves required for this purpose is then superfluous, so that a simple construction is obtained. By line is meant a line which is directly connected to the second central milk line and in such a manner that the chemicals can be metered directly into a flowing liquid.

In a preferred embodiment, the line cleaning device comprises a flow mixing device with an entrance side and an exit side for mixing a polyphase liquid during its flow from the entrance side to the exit side. Such a flow mixing device does not comprise moving parts and needs no control, so that the its use makes it possible to obtain in a simple manner a proper mixing of two or more phases in a flow of liquid. The unmixed liquid at the entrance side may, for example, consist of a phase with hot water and a phase with cold water, or a phase with water and a phase with cleaning chemicals.

In a favourable embodiment, the liquid discharge is connected to an automatic drinking station. In this manner, milk which is unfit for human consumption can automatically be fed. This is especially advantageous if the milk from a dairy animal should be fed to the respective young of this dairy animal.

It is further advantageous if the second central milk line comprises an additive adding device for adding additives to the milk flowing through the second central milk line. By adding particular additives, for example acids, the storage life of the milk can be prolonged, so that no cooling is required.

In a further advantageous embodiment, the additive adding device is controllable on the basis of the measured amount and/or composition of the milk flowing through the second central milk line. All kinds of milk sensors are usually present in the milking station, which milk sensors determine the composition and/or quality of the milk yielded. It often happens that the composition of the milk does not meet the composition desired for feeding. By adding the missing feed components, a better feeding is obtained. In addition, the amount of milk yielded is frequently measured in the milking station. In order to obtain the correct desired concentration of additive in the milk, this amount should be taken into consideration.

In a further particular embodiment, the second central milk line comprises a closable sewer connection near the liquid discharge. As a result thereof, the cleaning liquid need not be led via the same destination as the milk, such as via a second milk tank, before it is discharged. Thus, the milk in the second milk tank need not be removed during the cleaning of the second central milk line. By positioning the sewer connection close to the liquid discharge, the second milk line is cleaned completely or almost completely as far as the liquid discharge by a flowing cleaning liquid.

It is furthermore advantageous if the second central milk line comprises an interface sensor for detecting a milk/cleaning liquid interface and supplying an interface detection signal, the sewer connection being capable of being activated by the interface detection signal. This makes it possible for the first cleaning liquid, being preferably water, first to push the remaining milk in the line ahead of itself to the liquid discharge. All the remaining milk in the second central milk line can thus be collected. By detecting the interface of the remaining milk and the water, the water can be led to the sewer exactly at the right moment. Because the milk in the second milk tank is not intended for human consumption, small amounts of water (cleaning liquid) which are possibly present in the remaining milk will not cause any problem. An advantage of emptying by means of a liquid to emptying by means of compressed air is that, in comparison with compressed air, neither foam formation nor formation of free fatty acids in the milk will occur.

In a particular embodiment of the invention, the interface sensor comprises a conductivity sensor. By conductivity is meant electrical conductivity. The specific electrical conductivity of milk is greater than that of water. An interface between milk and rinsing water can properly be detected with such a sensor. Additionally, a conductivity sensor is cheap, fast and robust.

In a further particular embodiment of the invention, the interface sensor comprises an optical sensor. Since milk is white and opaque, in contrast with rinsing water or water with dissolved cleaning agent, which are usually transparent, an interface between these liquids can, on the basis thereof, be detected accurately and quickly.

In another further particular embodiment of the invention, the interface sensor comprises a temperature sensor. The milk which is transported by the second milk line is usually from a recent milking and has a temperature which is approximately equal to the body temperature of the animal milked. Said body temperature is considerably higher than the temperature of pre-rinsing water which is usually spring water or tap water. This temperature difference can be used for detecting the interface between the two liquids. The temperature sensor can also be used to check whether the temperature of the cleaning liquid meets the requirements.

Moreover, it is advantageous if the device comprises a control device for controlling a milking station and the line cleaning device. As a result thereof, one control device will suffice. In addition, data from the milking station can be used directly for the control of the line cleaning device. The fact that one or more milking stations are unoccupied can thus be used to supply a signal to clean the second central milk line.

In particular, each milking station comprises a robot for automatically connecting teat cups to the teats of an animal to be milked.

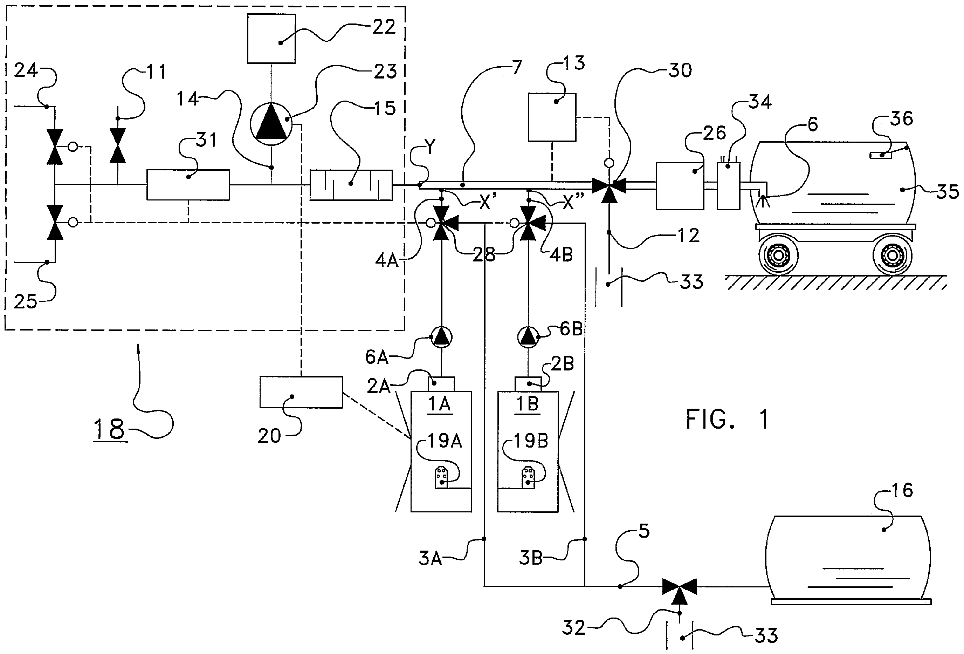

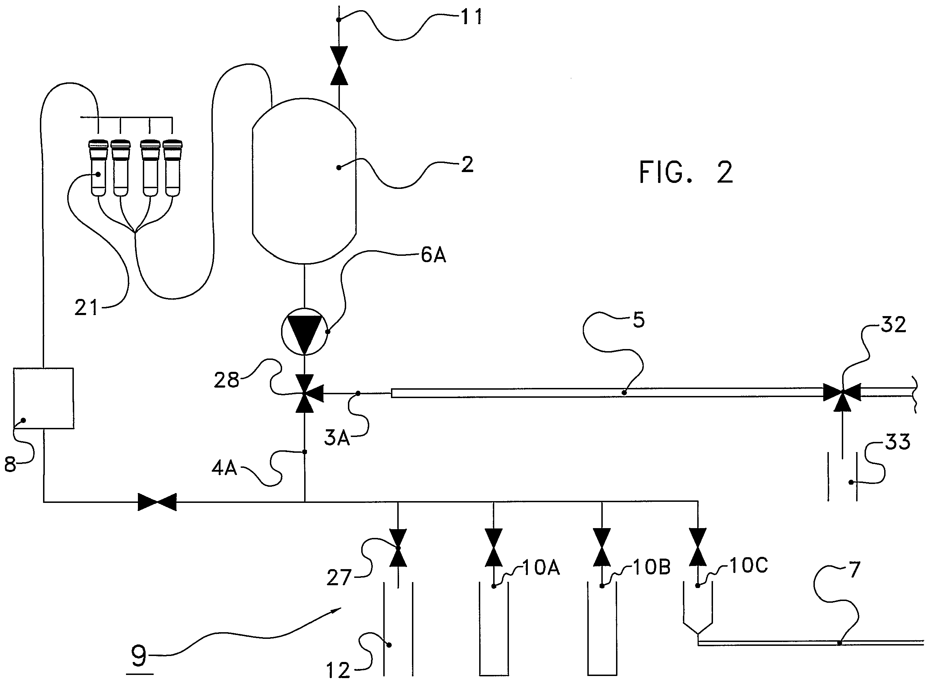

The invention will be explained hereinafter in further detail with reference to an exemplary embodiment diagrammatically shown in Figures 1 and 2.
Figure 1 is a diagrammatic view of an exemplary embodiment of the invention comprising two milking stations, and
Figure 2 is a diagrammatic view of a milk collecting vessel of a milking station comprising a separation device.

Figure 1 shows a device for milking animals comprising a plurality of milking stations 1A, 1B, wherein each milking station 1A, 1B comprises a milk collecting container 2A, 2B and a displacing means 6A, 6B for displacing liquid from the milk collecting container 2A, 2B, which milk collecting container 2A, 2B is connected to a first discharge line 3A, 3B and to a second discharge line 4A, 4B, wherein a second central milk line 7 is connected to the second discharge line 4A, 4B for leading milk from a plurality of milking stations 1A, 1B to a collective liquid discharge 6, and further comprising a line cleaning device 8, 18 connected to the second central milk line 7 for cleaning at least the second central milk line 7 with a cleaning liquid, characterized in that connection Y of the line cleaning device 8, 18 with the second central milk line 7 is located at least equally far from the liquid discharge 6 as the connection X', X" of a second discharge line 4A, 4B with the second central milk line 7. The displacing means is designed as a milk pump, but may also comprise a compressed air connection to the milk collecting container 2A, 2B which pushes the liquid out of the milk collecting container 2A, 2B by means of compressed air. Each milking station 1A, 1B comprises a robot 19A, 19B for automatically connecting teat cups 21 to the teats of an animal to be milked. Such a robot 19A, 19B is generally known and will not be explained in further detail. The first discharge lines 3A, 3B of both milking stations 1A, 1B meet in a first central milk line 5. The line cleaning device 18 is designed as a separate cleaning device for cleaning only the second central milk line 7. The second central milk line 7 comprises at one end a compressed air connection 11 and a closable second sewer connection 12 near the liquid discharge 6. The liquid discharge 6 is connected to a mobile second milk tank 35.

The line cleaning device 18 comprises a chemicals intake device 14 for direct intake of cleaning chemicals into a line, and a flow mixing device 15 with an entrance side and an exit side for mixing a polyphase liquid during its flow from the entrance side to the exit side. Intake of the chemicals from a supply 22 takes place by means of a metering pump 23. Alternatively, it is possible to have the intake take place via a venture pipe. The flow of the cleaning liquid, being water, through the venture pipe sucks an amount of chemicals from the supply 22. This offers the advantage of no pump with connection being required. At the rear side, totally upstream of the second central milk line 7, there is provided a connection to a cold water supply 24 and a hot water supply 25. By selecting the correct ratio of hot and cold water, the temperature of the cleaning liquid can be controlled.

Near the liquid discharge 6 there is provided a pasteurisation unit 26 in order to pasteurise the milk before it flows into the second milk tank 35. As a result of the fact that the milk is stored in the pasteurised state, it has a longer storage life and need not be cooled. The pasteurisation unit 26 may also be fixedly connected to the second milk tank 35 and may also be designed as a sterilisation unit in order to obtain an even longer storage life of the milk at room temperature.

The second central milk line 7 further comprises an additive adding device 34 for adding additives to the milk flowing through the second central milk line 7. Adding acid as an additive gives the milk a longer storage life. By adding a colorant the milk can be distinguished from other milk. The sort of colour may depend on the reason of separation, for example colostrum, too high conductivity or antibiotic residues in the milk. Additional nutrients, such as vitamins and minerals, may also be metered. The additive adding device 34 is controllable on the basis of the measured amount and/or composition of the milk flowing through the second central milk line 7 and is controlled by the control device 20. By adding the additives in metered portions to the milk directly in the second milk line 7, they are at once properly mixed with the milk passing by, and the second milk tank 35 can be designed relatively simply without separate metering device.

The second milk tank 35 further comprises displacing means in the form of wheels. By means of said wheels the second milk tank 35 is movable to a calf shed where an automatic drinking station is located. The second milk tank 35 is connectable to an automatic drinking station for displacing milk from the second milk tank 35 to the automatic drinking station. In a non-shown embodiment, the second central milk line 7 leads to a calf shed and the liquid discharge 6 is directly connected to an automatic drinking station.

The cleaning of the second milk tank 35, the pasteurisation unit 26 and the additive adding device 34 takes place by a separate non-shown cleaning device. The cleaning of the second milk tank 35 may also take place simultaneously with the cleaning of the second central milk line 7. In this case, the cleaning liquid is led from the second central milk line 7 into the second milk tank 35 and from the latter to the sewer 33.

The device comprises a control device 20 for controlling a milking station 1A, 1B and the line cleaning device 18. Said control device 20 controls inter alia the chemical pump 23, the additive adding device 34 and the various valves.

Figure 2 shows in more detail the valve system around a milking station 1A, 1B. The second central milk line 7 is connected to a separation device 9 of a milking station 1A, 1B for further transport of milk which is unfit for human consumption. Such a separation device 9 is known per se and is generally used in an automatic milking station 1A, 1B. The depicted separation device 9 comprises three open separation apertures 10A, 10B, 10C. In this case, the second central milk line 7 is directly connected to a separation aperture 10C. Two separation apertures 10A, 10B lead to a corresponding container. A fourth aperture which is closable by means of sewer valve 27 leads to the sewer 12.

The mode of operation of the device is as follows. A cow enters one of the two depicted milking stations 1A, 1B, is automatically identified and teat cups 21 are connected in a manner known per se by the robot 19A, 19B. The milk obtained is analysed and collected in a milk collecting container 2A, 2B. On the basis of the identification it is determined whether the cow has recently calved. The milk from such a cow is unfit for being processed for human consumption, but is very suitable for being fed to a calf. If this is the case, the milk is pumped from the milk collecting container 2A, 2B by the milk pump 6A, 6B through the second discharge line 4A, 4B to the second central milk line 7. This also takes place if it appears from the analysis that the milk is unfit for human consumption but is still fit for animal consumption. For this purpose, the control device 20 controls the separation valve 28 and the valve 10C to open. If, on the contrary, the milk is fit for human consumption, it is led in a known manner, via the first central milk line 5, to the first milk tank 16. If the milk is neither fit for animal consumption, it is led to the sewer 33 by controlling the sewer valve 27 to open, in which case the separation apertures 10A, 10B, 10C are closed (Figure 2).

Before the milk to be separated enters the second milk tank 35, it is first led through the pasteurisation unit 26 in order to give it a longer storage life at room temperature, and subsequently through the additive adding device 34. The amount and composition of the milk have been measured by the milking station 1A, 1B. The amount of additive is adjusted on the basis of these measured values. If, for example, the protein content of the milk measured by the milking station 1A, 1B is too low, the additive adding device 34 will add a corresponding amount of protein in order to achieve a desired nutritive value. The amount of milk determines how much preservative will be added as an additive. There is also added a colorant, for example a blue colorant, to the milk flow, in order to mark the milk as unfit for human consumption.

A float indicator 36 detects the liquid level in the second milk tank 35. If it detects that the liquid level has risen above a particular level, the control device 20 turns the three-way valve 30 so that all the milk will be led to the sewer 33. The second milk tank 35 is now completely filled and can be disconnected and moved to the calf shed in order to be connected there to an automatic calf drinking station.

Once a day the second central milk line 7 is automatically cleaned, preferably in a period of time when few milkings take place, such as at night. The control device 20 controls the separation valves 28 of both milking stations 1A, 1B to the first central milk line 5 to close. Subsequently, the inlet valves of the cold water supply 24 and the hot water supply 25 are controlled to open in a particular ratio. A Mixture of cold and hot water flows through the second central milk line 7 towards the liquid discharge 6 and pushes the milk residues ahead of itself into the second milk tank 35. At the moment when the interface sensor 13 detects the interface between the milk residues and the water, the three-way valve 30 is turned to the second sewer connection 12. The flow meter 31 measures the amount of rinsing water which flows through the second milk line 7 and, after a set amount, the pre-rinsing step is ended and the disinfection step is started. The control unit 20 changes the ratio of hot and cold water in order to obtain a hotter liquid flow. The metering pump 23 is controlled by the control device 20 and meters a particular amount of concentrated cleaning agent in the hotter liquid flow. The flow mixing device 15 mixes the cleaning agent with the water flow. The cleaning liquid is discharged near the liquid discharge 6 into the sewer 33. When a sufficient amount of cleaning liquid has flown through the second central milk line 7, the water supplies 24, 25 are controlled to close. Subsequently, the second central milk line 7 is emptied by means of compressed air via the compressed air connection 11 towards the sewer 33. This is followed by a post-rinsing of the milk tank with cold water analogous to the pre-rinsing step.

Instead of stopping a cleaning step on the basis of measuring the amount of cleaning liquid, it is also possible to end a cleaning step on the basis of time.

During cleaning the second central milk line 7, the milking stations 1A, 1B continue to be in operation.

The cleaning of the second central milk line 7 can also take place by means of the station cleaning device 8 of a milking station 1A, 1B. Such a cleaning device 8 is shown in Figure 2. In this case, the cleaning liquid from the most upstream milking station 1A is first sucked by the teat cups 21 into the milk collecting container 2A. From here, the cleaning liquid is not led by means of the milk pump 6A, 6B via the discharge line 3A and via a three-way valve to the second sewer connection 12, like in the case of a normal cleaning of the milking station 1A, 1B, but the cleaning liquid is led via the second discharge line 4A to the second central milk line 7. However, in this embodiment, it is also possible to lead the cleaning liquid both to the second central milk line 7 via the discharge line 4A and to the first central milk line 5 via the first discharge line 3A, so that both central milk lines 5, 7 are cleaned. This can take place one single time consecutively or in an alternating manner.

The milking station 1A, 1B has three different types of cleaning: a short rinsing of teat cups 21 with cold water after each milking, a hot cleaning of the whole interior of the milking station 1A, 1B after having milked milk which is unfit for human consumption and a hot cleaning with dissolved cleaning agent three times a day of the entire milking station 1A, 1B and all discharge lines. In all these cases, the cleaning liquid concerned can be led via the milk collecting container 2A, 2B to the second central milk line 7. By cleaning liquid is also meant steam.

This station cleaning device 8 is settable in a first position for cleaning only the second central milk line 7 and in a second position for cleaning the interior of the milking station 1A, 1B and, if desired, the first central milk line 5. The station cleaning device 8 sends the cleaning liquid directly to the second central milk line 7 without leading it first through the milking station 1A, 1B. For this purpose, the separation valve 28 is set in the direction of the separation device 9 and the cleaning liquid is led via the separation aperture 10C into the second central milk line 7 (Figure 2).

The cleaning devices 8, 18 are not limited to cleaning devices 8, 18 in which the cleaning liquid, after having flown once through the system, is led to the sewer 33, but can also be suitable for a so-called circulation cleaning. In the case of a cleaning of this type, the cleaning liquid is led back to the cleaning device 8, 18 for a second passage.

## Claims

1. Device for milking animals, comprising a plurality of milking stations (1A, 1B), a second central milk line (7) and a line cleaning device (8, 18), wherein at least two milking stations (1A, 1B) comprise a milk collecting container (2A, 2B) and a displacing means (6A, 6B) for displacing liquid from the milk collecting container (2A, 2B), which milk collecting container (2A, 2B) is connected to a first discharge line (3A, 3B) and to a second discharge line (4A, 4B), wherein the second central milk line (7) is connected to the second discharge line (4A, 4B) for leading milk from a plurality of milking stations (1A, 1B) to a collective liquid discharge (6), and wherein the line cleaning device (8, 18) is connected to the second central milk line (7) for cleaning at least the second central milk line (7) with a cleaning liquid, wherein the device comprises at least one station cleaning device (8) for cleaning the parts of a milking station (1A, 1B) that come into contact with milk, wherein the station cleaning device (8) is the line cleaning device, **characterized in that** the supply connection (Y) of the line cleaning device (8, 18) with the second central milk line (7) is located at least equally far from the liquid discharge (6) as the connection (X', X") of a second discharge line (4A, 4B) with the second central milk line (7), and **in that** the station cleaning device (8) is capable of being brought into a first position for cleaning only the second central milk line (7) and into a second position for cleaning the milking station (1A, 1B).

2. Device according to claim 1, **characterized in that** the first discharge line (3A, 3B) is connected to a first central milk line (5) for leading milk to a first milk tank (16).

3. Device according to one of the preceding claims, **characterized in that** the second central milk line (7) is connected to a separation device (9) of a milking station (1A, 1B) for separating milk which is unfit for human consumption.

4. Device according to claim 3 **characterized in that** the separation device (9) comprises at least one open separation aperture (10A, 10B, 10C) for separating milk which is unfit for human consumption in a separate container, and **in that** the second central milk line (7) is connectable to the separation aperture (10A, 10B, 10C).

5. Device according to one of the preceding claims, **characterized in that** the second central milk line (7) comprises a compressed air connection (11).

6. Device according to one of the preceding claims, **characterized in that** the line cleaning device (8, 18) comprises a chemicals intake means for direct intake of cleaning chemicals into a line.

7. Device according to one of the preceding claims, **characterized in that** the line cleaning device (8, 18) comprises a flow mixing device (15) with an entrance side and an exit side for mixing a polyphase liquid during its flow from the entrance side to the exit side.

8. Device according to one of the preceding claims, **characterized in that** the liquid discharge (6) is connected to an automatic drinking station.

9. Device according to one of the preceding claims, **characterized in that** the liquid discharge (6) is connected to a second milk tank (35).

10. Device according to one of the preceding claims, **characterized in that** the second central milk line (7) comprises an additive adding device (34) for adding additives to the milk flowing through the second central milk line (7).

11. Device according to claim 10 **characterized in that** the additive adding device (34) is controllable on the basis of the measured amount and/or composition of the milk flowing through the second central milk line (7).

12. Device according to one of the preceding claims, **characterized in that** the second central milk line (7) comprises a closable sewer connection near the liquid discharge.

13. Device according to claim 12 **characterized in that** the second central milk line (7) comprises an interface sensor (13) for detecting a milk/cleaning liquid interface and supplying an interface detection signal, wherein the sewer connection is capable of being activated on the basis of the interface detection signal.

14. Device according to claim 13 **characterized in that** the interface sensor (13) comprises a conductivity sensor, an optical sensor, or a temperature sensor.

15. Device according to one of the preceding claims, **characterized in that** the device comprises a control device (20) for controlling a milking station (1A, 1B) and the line cleaning device (8, 18).

16. Device according to one of the preceding claims, **characterized in that** each milking station (1A, 1B) comprises a robot (19A, 19B) for automatically connecting teat cups (21) to the teats of an animal to be milked.

## Patentansprüche

1. Vorrichtung zum Melken von Tieren, die mehrere Melkstationen (1A, 1B), eine zweite zentrale Milchleitung (7) und eine Leitungsreinigungsvorrichtung (8, 18) aufweist, wobei mindestens zwei Melkstationen (1A, 1B) einen Milchsammelbehälter (2A, 2B) und Verdrängungsmittel (6A, 6B) zum Verdrängen von Flüssigkeit aus dem Milchsammelbehälter (2A, 2B) aufweisen, wobei der Milchsammelbehälter (2A, 2B) mit einer ersten Abflussleitung (3A, 3B) und mit einer zweiten Abflussleitung (4A, 4B) verbunden ist, wobei die zweite zentrale Milchleitung (7) mit der zweiten Abflussleitung (4A, 4B) verbunden ist, um Milch von mehreren Melkstationen (1A, 1B) an einen gemeinsamen Flüssigkeitsablass (6) zu führen, und wobei die Leitungsreinigungsvorrichtung (8, 18) zum Reinigen mindestens der zweiten zentralen Milchleitung (7) mit einer Reinigungsflüssigkeit mit der zweiten zentralen Milchleitung (7) verbunden ist, wobei die Vorrichtung mindestens eine Stationsreinigungsvorrichtung (8) zum Reinigen der Teile einer Melkstation (1A, 1B), die in Kontakt mit der Milch kommen, aufweist, wobei die Stationsreinigungsvorrichtung (8) die Leitungsreinigungsvorrichtung ist,
**dadurch gekennzeichnet, dass** sich der Zufuhranschluss (Y) der Leitungsreinigungsvorrichtung (8, 18) mit der zweiten zentralen Milchleitung (7) mindestens genauso weit von dem Flüssigkeitsablass (6) weg befindet wie der Anschluss (X', X") einer zweiten Abflussleitung (4A, 4B) mit der zweiten zentralen Milchleitung (7), und dadurch, dass die Stationsreinigungsvorrichtung (8) in der Lage ist, in eine erste Position zum Reinigen ausschließlich der zweiten zentralen Milchleitung (7) und in eine zweite Position zum Reinigen der Melkstation (1A, 1B) gebracht zu werden.

2. Vorrichtung nach Anspruch 1, **dadurch gekennzeichnet, dass** die erste Abflussleitung (3A, 3B) mit einer ersten zentralen Milchleitung (5) verbunden ist, um Milch in einen ersten Milchtank (16) zu führen.

3. Vorrichtung nach einem der vorhergehenden Ansprüche, **dadurch gekennzeichnet, dass** die zweite zentrale Milchleitung (7) mit einer Abscheidungsvorrichtung (9) einer Melkstation (1A, 1B) verbunden ist, um Milch abzuscheiden, die zum menschlichen Verzehr ungeeignet ist.

4. Vorrichtung nach Anspruch 3, **dadurch gekennzeichnet, dass** die Abscheidungsvorrichtung (9) mindestens eine geöffnete Abscheidungsöffnung (10A, 10B, 10C) aufweist, um Milch, die zum menschlichen Verzehr ungeeignet ist, in einen getrennten Behälter abzuscheiden, und dadurch, dass die zweite zentrale Milchleitung (7) mit der Abscheidungsöffnung (10A, 10B, 10C) verbunden werden kann.

5. Vorrichtung nach einem der vorhergehenden Ansprüche, **dadurch gekennzeichnet, dass** die zweite zentrale Milchleitung (7) einen Druckluftanschluss (11) aufweist.

6. Vorrichtung nach einem der vorhergehenden Ansprüche, **dadurch gekennzeichnet, dass** die Leitungsreinigungsvorrichtung (8, 18) Chemikalieneinlassmittel zum direkten Einlass von Reinigungschemikalien in eine Leitung aufweist.

7. Vorrichtung nach einem der vorhergehenden Ansprüche, **dadurch gekennzeichnet, dass** die Leitungsreinigungsvorrichtung (8, 18) eine Durchflussmischvorrichtung (15) mit einer Eingangsseite und einer Ausgangsseite aufweist, um eine Mehrphasenflüssigkeit während ihres Flusses von der Eingangsseite zu der Ausgangsseite zu mischen.

8. Vorrichtung nach einem der vorhergehenden Ansprüche, **dadurch gekennzeichnet, dass** der Flüssigkeitsablass (6) mit einer automatischen Trinkstation verbunden ist.

9. Vorrichtung nach einem der vorhergehenden Ansprüche, **dadurch gekennzeichnet, dass** der Flüssigkeitsablass (6) mit einem zweiten Milchtank (35) verbunden ist.

10. Vorrichtung nach einem der vorhergehenden Ansprüche, **dadurch gekennzeichnet, dass** die zweite zentrale Milchleitung (7) eine Zusatzstoffzugabevorrichtung (34) zum Zugeben von Zusatzstoffen zu der Milch, die durch die zweite zentrale Milchleitung (7) fließt, aufweist.

11. Vorrichtung nach Anspruch 10, **dadurch gekennzeichnet, dass** die Zusatzstoffzugabevorrichtung (34) auf der Grundlage der gemessenen Menge und/oder Zusammensetzung der Milch, die durch die zweite zentrale Milchleitung (7) fließt, steuerbar ist.

12. Vorrichtung nach einem der vorhergehenden Ansprüche, **dadurch gekennzeichnet, dass** die zweite zentrale Milchleitung (7) einen verschließbaren Abwasseranschluss nahe der Flüssigkeitsabgabe aufweist.

13. Vorrichtung nach Anspruch 12, **dadurch gekennzeichnet, dass** die zweite zentrale Milchleitung (7) einen Übergangsstellensensor (13) zum Erkennen einer Milch-Reinigungsflüssigkeit-Übergangsstelle und Bereitstellen eines Übergangsstellenerkennungssignals aufweist, wobei der Abwasseranschluss in der Lage ist, auf der Grundlage des Übergangsstellenerkennungssignals aktiviert zu werden.

14. Vorrichtung nach Anspruch 13, **dadurch gekennzeichnet, dass** der Übergangsstellensensor (13) einen Leitfähigkeitssensor, einen optischen Sensor oder einen Temperatursensor aufweist.

15. Vorrichtung nach einem der vorhergehenden Ansprüche, **dadurch gekennzeichnet, dass** die Vorrichtung eine Steuervorrichtung (20) zum Steuern von einer Melkstation (1A, 1B) und der Leitungsreinigungsvorrichtung (8, 18) aufweist.

16. Vorrichtung nach einem der vorhergehenden Ansprüche, **dadurch gekennzeichnet, dass** jede Melkstation (1A, 1B) einen Roboter (19A, 19B) zum automatischen Verbinden von Zitzenbechern (21) mit den Zitzen eines zu melkenden Tiers zu verbinden.

## Revendications

1. Dispositif pour la traite d'animaux, comprenant une pluralité de postes de traite (1A, 1B), une seconde conduite centrale de lait (7) et un dispositif de nettoyage de conduite (8, 18), au moins deux postes de traite (1A, 1B) comprenant un réceptacle de collecte de lait (2A, 2B) et un moyen de déplacement (6A, 6B) permettant de déplacer du liquide à partir du réceptacle de collecte de lait (2A, 2B), ledit réceptacle de collecte de lait (2A, 2B) étant raccordé à une première conduite d'évacuation (3A, 3B) et à une seconde conduite d'évacuation (4A, 4B), la seconde conduite centrale de lait (7) étant raccordée à la seconde conduite d'évacuation (4A, 4B) afin d'acheminer du lait depuis une pluralité de postes de traite (1A, 1B) vers un point d'évacuation de liquide (6) collectif, et le dispositif de nettoyage de conduite (8, 18) étant raccordé à la seconde conduite centrale de lait (7) afin de nettoyer au moins la seconde conduite centrale de lait (7) au moyen d'un liquide de nettoyage, le dispositif comprenant au moins un dispositif de nettoyage de poste (8) servant à nettoyer les parties d'un poste de traite (1A, 1B) qui viennent en contact avec le lait, le dispositif de nettoyage de poste (8) étant le dispositif de nettoyage de conduite,
**caractérisé en ce que** le raccordement d'alimentation (Y) du dispositif de nettoyage de conduite (8, 18) avec la seconde conduite centrale de lait (7) est situé à une distance au moins égale du point d'évacuation de liquide (6) que le raccordement (X', X") d'une seconde conduite d'évacuation (4A, 4B) avec la seconde conduite centrale de lait (7), et **en ce que** le dispositif de nettoyage de poste (8) peut être placé dans une première position pour le nettoyage uniquement de la seconde conduite centrale de lait (7) et dans une seconde position pour le nettoyage du poste de traite (1A, 1B).

2. Dispositif selon la revendication 1, **caractérisé en ce que** la première conduite d'évacuation (3A, 3B) est raccordée à une première conduite centrale de lait (5) afin d'acheminer du lait à une première cuve de lait (16).

3. Dispositif selon l'une des revendications précédentes, **caractérisé en ce que** la seconde conduite centrale de lait (7) est raccordée à un dispositif de séparation (9) d'un poste de traite (1A, 1B) servant à séparer le lait qui est impropre à la consommation humaine.

4. Dispositif selon la revendication 3, **caractérisé en ce que** le dispositif de séparation (9) comprend au moins un orifice de séparation (10A, 10B, 10C) ouvert servant à séparer le lait qui est impropre à la consommation humaine dans un réceptacle distinct, et **en ce que** la seconde conduite centrale de lait (7) peut être raccordée à l'orifice de séparation (10A, 10B, 10C).

5. Dispositif selon l'une des revendications précédentes, **caractérisé en ce que** la seconde conduite centrale de lait (7) comprend un raccordement d'air comprimé (11).

6. Dispositif selon l'une des revendications précédentes, **caractérisé en ce que** le dispositif de nettoyage de conduite (8, 18) comprend un moyen d'admission de produits chimiques servant à l'admission directe de produits chimiques de nettoyage dans une conduite.

7. Dispositif selon l'une des revendications précédentes, **caractérisé en ce que** le dispositif de nettoyage de conduite (8, 18) comprend un dispositif de mélange d'écoulement (15) comportant un côté d'entrée et un côté de sortie pour le mélange d'un liquide polyphasique au cours de son écoulement du côté d'entrée au côté de sortie.

8. Dispositif selon l'une des revendications précédentes, **caractérisé en ce que** le point d'évacuation de liquide (6) est raccordé à un poste de consommation automatique.

9. Dispositif selon l'une des revendications précédentes, **caractérisé en ce que** le point d'évacuation de liquide (6) est raccordé à une seconde cuve de lait (35).

10. Dispositif selon l'une des revendications précédentes, **caractérisé en ce que** la seconde conduite centrale de lait (7) comprend un dispositif d'ajout d'additif (34) servant à ajouter des additifs au lait s'écoulant à travers la seconde conduite centrale de lait (7).

11. Dispositif selon la revendication 10, **caractérisé en ce que** le dispositif d'ajout d'additif (34) peut être commandé sur la base de la quantité mesurée et/ou de la composition du lait s'écoulant à travers la seconde conduite centrale de lait (7).

12. Dispositif selon l'une des revendications précédentes, **caractérisé en ce que** la seconde conduite centrale de lait (7) comprend un raccordement à l'égout pouvant être fermé à proximité du point d'évacuation de liquide.

13. Dispositif selon la revendication 12, **caractérisé en ce que** la seconde conduite centrale de lait (7) comprend un capteur d'interface (13) servant à détecter une interface lait/liquide de nettoyage et à délivrer un signal de détection d'interface, le raccordement à l'égout pouvant être activé sur la base du signal de détection d'interface.

14. Dispositif selon la revendication 13, **caractérisé en ce que** le capteur d'interface (13) comprend un capteur de conductivité, un capteur optique ou un capteur de température.

15. Dispositif selon l'une des revendications précédentes, **caractérisé en ce que** le dispositif comprend un dispositif de commande (20) servant à commander un poste de traite (1A, 1B) et le dispositif de nettoyage de conduite (8, 18).

16. Dispositif selon l'une des revendications précédentes, **caractérisé en ce que** chaque poste de traite (1A, 1B) comprend un robot (19A, 19B) servant à raccorder automatiquement les gobelets trayeurs (21) aux trayons d'un animal à traire.
